# EUROPEAN PATENT SPECIFICATION

(11) **EP 4 119 979 B1**
(45) Date of publication and mention of the grant of the patent: **30.09.2026**
(21) Application number: 20926758.2
(22) Date of filing: 24.03.2020
(51) Int. Cl.: G01S 13/34, G01S 13/42, G01S 13/931, G01S 13/58

(54) **RADAR SIGNAL TRANSMITTING AND RECEIVING METHOD, AND RADAR**
VERFAHREN ZUM SENDEN UND EMPFANGEN VON RADARSIGNALEN, UND RADAR
PROCÉDÉ D'ÉMISSION ET DE RÉCEPTION DE SIGNAL RADAR, ET RADAR

(43) Date of publication of application: 18.01.2023
(73) Proprietor: Yinwang Intelligent Technologies Co., Ltd., Shenzhen, Guangdong 518129 (CN)
(72) Inventor: LIU, Jinnan, Shenzhen, Guangdong 518129 (CN); YANG, Chen, Shenzhen, Guangdong 518129 (CN); LAO, Dapeng, Shenzhen, Guangdong 518129 (CN); ZHU, Jintai, Shenzhen, Guangdong 518129 (CN); ZHOU, Mu, Shenzhen, Guangdong 518129 (CN)
(74) Representative: Gill Jennings & Every LLP
(86) International application number: PCT/CN2020/080977
(87) International publication number: WO 2021/189268

(56) References cited:
- CN-A- 106 796 283
- CN-A- 108 594 233
- CN-A- 109 642 944
- CN-A- 110 412 558
- US-A1- 2018 294 564
- SCHMID CHRISTIAN M. ET AL: "Motion compensation and efficient array design for TDMA FMCW MIMO radar systems", 2012 6TH EUROPEAN CONFERENCE ON ANTENNAS AND PROPAGATION (EUCAP), 1 June 2012 (2012-06-01), pages 1746 - 1750, XP055853360, ISBN: 978-1-4577-0919-7, DOI: 10.1109/EuCAP.2012.6206605
- KATO HIDETAKA ET AL: "Transmission Error Correction Using Overlapping Elements in Virtual Array of MIMO Radar", 2018 INTERNATIONAL SYMPOSIUM ON ANTENNAS AND PROPAGATION (ISAP), KIEES, 23 October 2018 (2018-10-23), pages 1 - 2, XP033513778
- KAIFAS THEODOROS N ET AL: "MIMO Architecture Modelling Utilizing Overlapped Element Antenna Arrays", 2019 8TH INTERNATIONAL CONFERENCE ON MODERN CIRCUITS AND SYSTEMS TECHNOLOGIES (MOCAST), IEEE, 13 May 2019 (2019-05-13), pages 1 - 4, XP033563068, DOI: 10.1109/MOCAST.2019.8741742
- BECHTER JONATHAN ET AL: "Compensation of Motion-Induced Phase Errors in TDM MIMO Radars", IEEE MICROWAVE AND WIRELESS COMPONENTS LETTERS, vol. 27, no. 12, 1 December 2017 (2017-12-01), US, pages 1164 - 1166, XP055853362, ISSN: 1531-1309, DOI: 10.1109/LMWC.2017.2751301
- SCHMID CHRISTIAN M., FEGER REINHARD, PFEFFER CLEMENS, STELZER ANDREAS: "Motion compensation and efficient array design for TDMA FMCW MIMO radar systems", 2012 6TH EUROPEAN CONFERENCE ON ANTENNAS AND PROPAGATION (EUCAP), 1 June 2012 (2012-06-01), pages 1746 - 1750, XP055853360, ISBN: 978-1-4577-0919-7, DOI: 10.1109/EuCAP.2012.6206605
- BECHTER JONATHAN, ROOS FABIAN, WALDSCHMIDT CHRISTIAN: "Compensation of Motion-Induced Phase Errors in TDM MIMO Radars", IEEE MICROWAVE AND WIRELESS COMPONENTS LETTERS, vol. 27, no. 12, 1 December 2017 (2017-12-01), US, pages 1164 - 1166, XP055853362, ISSN: 1558-1764, DOI: 10.1109/LMWC.2017.2751301

## Description

### TECHNICAL FIELD

This application relates to the field of sensor technologies, and in particular, to a radar signal transmitting and receiving method and a radar.

### BACKGROUND

An in-vehicle radar is an essential sensor in a self-driving system, and obstacle (also referred to as a target) detection may be provided for a vehicle by using the in-vehicle radar. Specifically, the in-vehicle radar may send a frequency modulated continuous wave (frequency modulated continuous wave, FMCW), and measure a distance, a speed, and an azimuth of an obstacle by detecting a reflection echo of the obstacle.

In recent years, an in-vehicle radar technology continuously evolves, and in-vehicle radar performance continuously improves, which may be specifically embodied in the following aspects: A frequency band gradually evolves from 24 GHz to 77 GHz/79 GHz, thereby obtaining higher range resolution by using a larger scanning bandwidth. In terms of a waveform, a chirp (chirp) scanning period reduces from several ms to a µs level, so that distance measurement and speed measurement are decoupled, a false target probability is reduced, and a non-ideal characteristic near a direct current can be effectively avoided. A channel quantity evolves from a single-input multiple-output (single input multiple output, SIMO) mode to a multiple-input multiple-output (multiple input multiple output, MIMO) mode. In addition, an antenna size is constantly expanded, so that a virtual antenna aperture is enlarged, and angle resolution is increased, which can meet a requirement for implementing higher spatial resolution of a target in self-driving.

Currently, in a MIMO radar, a plurality of antennas may send chirp signals in a time division multiplexing (time division multiplexing, TDM) manner, so as to achieve an effect of extending a virtual antenna aperture. However, a maximum speed measurement range of the TDM MIMO radar decreases. Generally, the maximum speed measurement range of the radar may be represented as *±Vₘₐₓ = λ*/(4 ** T*), where λ is a wavelength of a modulation frequency, and T is a period of repeated transmission of a same antenna. It is assumed that duration for a single antenna to send a chirp is *T_{SIMO}* (that may be denoted as a timeslot). Therefore, in the TDM MIMO radar, at least *N_{Tx}* timeslots are required for sending *N_{Tx}* chirp signals in the time division manner, that is, duration for sending *N_{Tx}* chirps in the time division multiplexing manner by using *N_{Tx}* antennas is *T_{MIMO} = N_{Tx} * T_{SIMO}.* Under a same condition of duration for a single antenna to send a chirp, a relationship between a maximum speed measurement range *V_{max_MIMO}* transmitted by *N_{Tx}* antennas and a speed measurement interval *V_{max_SIMO}* transmitted by a single antenna is as follows: *V_{max_SIMO} = N_{Tx} * V_{max_MIMO}.* It can be learned from the foregoing formula that, in the TDM MIMO radar, because a quantity of transmit antennas increases, the maximum speed measurement range decreases compared with that of a SIMO radar. In addition, a larger quantity *N_{Tx}* of transmit antennas causes a larger decrease of the maximum speed measurement range. When the maximum speed measurement range decreases, speed aliasing is more likely to occur during speed calculation of the target. In addition, due to coupling of speed measurement and angle measurement in the TDM MIMO radar, speed aliasing affects solving of an angle, which cannot achieve an intended purpose of increasing the spatial resolution of the target.

To resolve the foregoing problem, the conventional technology, J. Bechter, F. Roos, C. Waldschmidt, "Compensation of Motion-Induced Phase Errors in TDM MIMO Radars", IEEE Microwave and Wireless Components Letters, vol. 27, no. 12, pp. 1164-1166, Dec. 2017, XP55853362, provides a method for solving a speed by using a phase difference between elements at a same position in virtual receive elements formed by adjacent transmit antennas. The elements at the same position in the virtual receive elements may also be referred to as overlapping elements (Overlapping Element). However, the method has the following problem: Because a quantity of overlapping elements is limited by an antenna layout, in design, to reduce a loss of a virtual antenna aperture, the quantity of overlapping elements is generally relatively small. In addition, a quantity of overlapping elements that can be used is further limited because overlapping elements formed by adjacent transmit antennas need to be used. Consequently, a phase difference between overlapping elements is easily affected by noise, thereby affecting correct speed solving of the target.

SCHMID CHRISTIAN M. ET AL, "Motion compensation and efficient array design for TDMA FMCW MIMO radar systems", 2012 6TH EUROPEAN CONFERENCE ON ANTENNAS AND PROPAGATION (EUCAP), (20120601), doi:10.1109/EuCAP.2012.6206605, ISBN 978-1-4577-0919-7, pages 1746 - 1750, XP55853360, relates to motion compensation and efficient array design for TDMA FMCW MIMO radar systems.

### SUMMARY

Implementations of this application provide a radar signal transmitting method and a radar, so as to resolve a problem that a phase difference between overlapping elements is easily affected by noise, thereby affecting correct speed solving of a target.

The invention has been defined in claim 1. Further specific technical features have been defined in the dependent claims.

In the design of the measurement frame provided in this implementation of this application, by using the preset transmit sequence of the *N_{Tx}* transmit antennas, overlapping elements with a plurality of transmit intervals can be constructed, and a quantity of overlapping elements can be increased. In the conventional technology, there are a relatively small quantity of overlapping elements and overlapping elements with a single transmit interval, when a phase difference between overlapping elements is greatly affected by noise, correct speed solving of a target is directly affected. However, in this implementation of this application, overlapping elements with a plurality of transmit intervals are constructed, and there are a relatively large quantity of overlapping elements. Even if phase differences between some of the overlapping elements are greatly affected by noise, phase differences between a plurality of overlapping elements with a plurality of transmit intervals may be processed, to effectively reduce impact, on speed solving, of the phase differences between the overlapping elements that are greatly affected by noise, thereby improving accuracy of speed solving of the target.

According to the disclosed solution, the quantity of overlapping elements can be increased.

According to the disclosed solution, by using the preset transmit sequence of the *N_{Tx}* transmit antennas, overlapping elements with a plurality of transmit intervals can be constructed, and a quantity of overlapping elements can be increased.

According to the disclosed solution, values of *N₁* and *N₂* are determined based on the antenna layout and the preset transmit sequence.

It may be understood that, because a smaller value of the transmit interval indicates a larger corresponding speed measurement range, a fewer times of aliasing may be implemented. Therefore, the values of *N₁* and *N₂* are generally relatively small.

### BRIEF DESCRIPTION OF DRAWINGS

FIG. 1 is a schematic diagram of a structure of a MIMO radar system according to this application;
FIG. 2 is a functional block diagram of a vehicle 200 that has a self-driving function according to this application;
FIG. 3 is a first schematic diagram of two pairs of overlapping elements formed by a horizontal array with three transmit antennas and four receive antennas according to this application;
FIG. 4 is an overview flowchart of a radar signal transmitting method according to this application;
FIG. 5 is a second schematic diagram of two pairs of overlapping elements formed by a horizontal array with three transmit antennas and four receive antennas according to this application;
FIG. 6(a) to FIG. 6(c) are schematic diagrams of a possible transmit sequence of transmit antennas according to this application;
FIG. 7 is a schematic diagram of aliasing coefficient ranges respectively corresponding to overlapping elements with different transmit intervals according to this application; and
FIG. 8 is a schematic diagram of a structure of a radar according to this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those that comprise at least all the features of an independent claim. Any implementation that does not fall within the scope of the claims does not form part of the invention, but rather included as an illustrative example that is useful for understanding the invention.

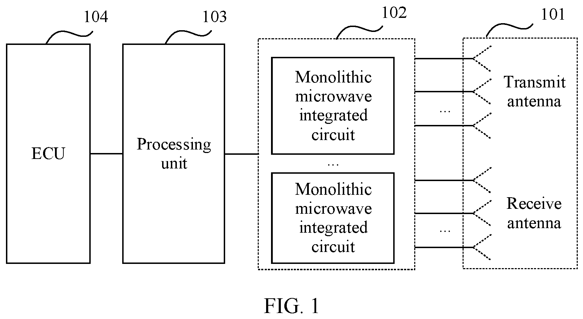

In this implementation of this application, as shown in FIG. 1, a MIMO radar system may include an antenna array 101, a microwave integrated circuit (monolithic microwave integrated circuit, MMIC) 102, and a processing unit 103. The antenna array 101 may include a plurality of transmit antennas and a plurality of receive antennas.

The microwave integrated circuit 102 is configured to generate a radar signal, and further send the radar signal by using the antenna array 101. The radar signal includes a plurality of chirp signals. After the radar signal is sent, an echo signal is formed after reflection by one or more targets, and the echo signal is received by a receive antenna. The microwave integrated circuit 102 is further configured to perform processing such as conversion and sampling on the echo signal received by the antenna array 101, and transmit a processed echo signal to the processing unit 103.

The processing unit 103 is configured to perform operations such as fast Fourier transformation (Fast Fourier Transformation, FFT) and signal processing on the echo signal, so as to determine information such as a distance, a speed, and an azimuth of a target based on the received echo signal. Specifically, the processing unit 103 may be a device that has a processing function, such as a micro control unit (microcontroller unit, MCU), a central processing unit (central process unit, CPU), a digital signal processor (digital signal processor, DSP), a field-programmable gate array (field-programmable gate array, FPGA), a dedicated accelerator, or the like.

In addition, the radar system shown in FIG. 1 may further include an electronic control unit (electronic control unit, ECU) 104, configured to control a vehicle based on information such as the distance, the speed, and the azimuth of the target obtained after processing by the processing unit 103, for example, determine a driving route of the vehicle, and control a speed of the vehicle.

A transmitter in this implementation of this application may include a transmit antenna and a transmit channel in the microwave integrated circuit 102, and a receiver may include a receive antenna and a receive channel in the microwave integrated circuit 102. The transmit antenna and the receive antenna may be located on a printed circuit board (print circuit board, PCB), and the transmit channel and the receive channel may be located in a chip, that is, an AOB (antenna on PCB). Alternatively, the transmit antenna and the receive antenna may be located in a chip package, and the transmit channel and the receive channel may be located in a chip, that is, an AIP (antenna in package). A combination form is not specifically limited in this implementation of this application. It should be understood that specific structures of the transmit channel and the receive channel are not limited in this implementation of this application, provided that a corresponding transmit and receive function can be implemented.

In addition, because a quantity of channel specifications of a single microwave integrated circuit (radio frequency chip) is relatively limited, when a quantity of receive and transmit channels required by the system is greater than that of a single radio frequency chip, a plurality of radio frequency chips need to be cascaded. Therefore, the entire radar system may include a plurality of cascaded radio frequency chips. For example, a transmit antenna array and a receive antenna array are obtained by cascading a plurality of MIMOs, and an analog signal output by each radio frequency chip is connected to an analog to digital converter (analog digital converter, ADC) by using an interface, and the ADC transmits digital data to the processing unit 103, for example, an MCU, a DSP, an FPGA, a general processing unit (General Process Unit, GPU), and the like. For another example, the MMIC and the DSP may be integrated into one chip, referred to as a system on chip (System on chip, SOC). For another example, the MMIC, the ADC, and the processing unit 103 may be integrated into one chip to form an SOC. In addition, the entire vehicle may be installed with one or more radar systems, and is connected to the central processing unit by using an in-vehicle bus. The central processing unit controls one or more in-vehicle sensors, including one or more millimeter wave radar sensors.

The following describes an application scenario of an implementation of this application.

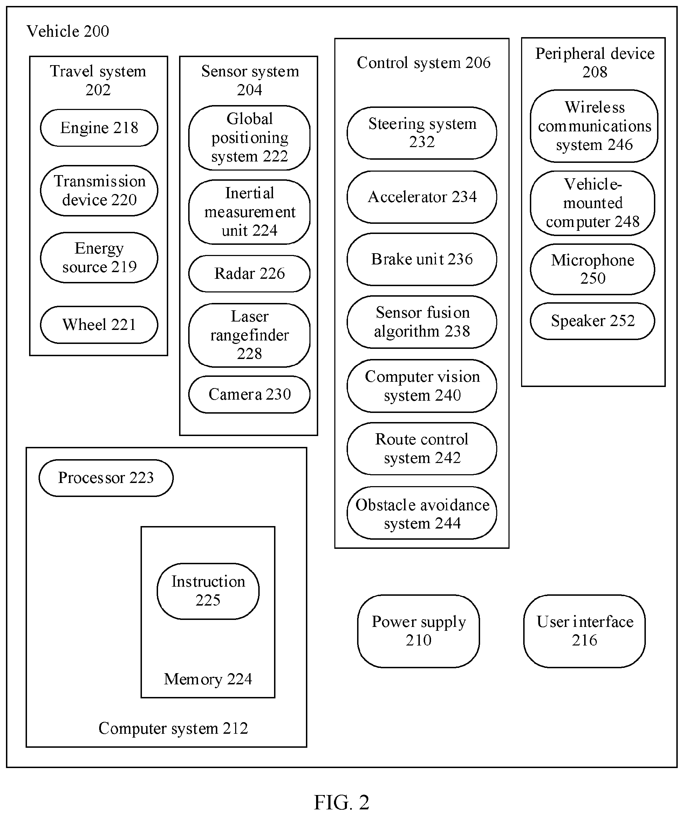

The MIMO radar system shown in FIG. 1 may be applied to a vehicle with a self-driving function. FIG. 2 is a functional block diagram of a vehicle 200 with a self-driving function according to an implementation of this application. In an implementation, the vehicle 200 is configured in a fully or partially self-driving mode. For example, the vehicle 200 may control the vehicle 200 itself when being in a self-driving mode, and may determine current states of the vehicle and a surrounding environment by using a manual operation, determine a possible behavior of at least one another vehicle in the surrounding environment, determine a confidence level corresponding to a possibility that the another vehicle performs the possible behavior, and control the vehicle 200 based on determined information. When the vehicle 200 is in the self-driving mode, the vehicle 200 may be set to operate when not interacting with a person.

The vehicle 200 may include various subsystems, such as a travel system 202, a sensor system 204, a control system 206, one or more peripheral devices 208, a power supply 210, a computer system 212, and a user interface 216. Optionally, the vehicle 200 may include more or fewer subsystems, and each subsystem may include a plurality of elements. In addition, each subsystem and element of the vehicle 200 may be interconnected in a wired or wireless manner.

The travel system 202 may include a component that powers the vehicle 200 for movement. In an implementation, the travel system 202 may include an engine 218, an energy source 219, a transmission device 220, and a wheel/tire 221. The engine 218 may be an internal combustion engine, an electromotor, an air compression engine, or another type of engine combination, such as a hybrid engine composed of a gas-fuel engine and an electromotor, and a hybrid engine composed of an internal combustion engine and an air compression engine. The engine 218 converts the energy source 219 into mechanical energy.

Examples of the energy source 219 include gasoline, diesel, other petroleum-based fuels, propane, other compressed gas-based fuels, ethanol, solar cell panels, batteries, and other power sources. The energy source 219 may also provide energy for another system of the vehicle 200.

The transmission device 220 may transmit mechanical power from the engine 218 to the wheel 221. The transmission device 220 may include a gearbox, a differential, and a drive shaft. In an implementation, the transmission device 220 may further include another device, such as a clutch. The drive shaft may include one or more shafts that can be coupled to one or more wheels 221.

The sensor system 204 may include several sensors that sense surrounding environment information of the vehicle 200. For example, the sensor system 204 may include a positioning system 222 (the positioning system may be a global positioning system (global positioning system, GPS) system, or may be a BeiDou system or another positioning system), an inertial measurement unit (inertial measurement unit, IMU) 224, a radar 226, a laser rangefinder 228, and a camera 230. The sensor system 204 may further include a sensor of an internal system of the monitored vehicle 200 (for example, an in-vehicle air quality monitor, a fuel gauge, and an engine oil temperature gauge). Sensor data from one or more of these sensors can be used to detect an object and its corresponding characteristics (a position, a shape, a direction, a speed, and the like). Such detection and identification is a key function of a safe operation of the vehicle 200.

The positioning system 222 may be configured to estimate a geographical position of the vehicle 200. The IMU 224 is configured to sense a position and a direction change of the vehicle 200 based on an inertial acceleration. In an implementation, the IMU 224 may be a combination of an accelerometer and a gyroscope.

The radar 226 may use a radio signal to sense a target within the surrounding environment of vehicle 200. In some implementations, in addition to sensing the target, the radar 226 may be configured to sense a speed and/or a heading direction of the target. In a specific example, the radar 226 may be implemented by using the MIMO radar system shown in FIG. 1.

The laser rangefinder 228 may use laser to sense a target in an environment in which the vehicle 100 is located. In some implementations, the laser rangefinder 228 may include one or more laser sources, a laser scanner, and one or more detectors, as well as another system component.

The camera 230 may be configured to capture a plurality of images of the surrounding environment of the vehicle 200. The camera 230 may be a static camera or a video camera.

The control system 206 controls operations of the vehicle 200 and its components. The control system 206 may include various elements, including a steering system 232, an accelerator 234, a brake unit 236, a sensor fusion algorithm 238, a computer vision system 240, a route control system 242, and an obstacle avoidance system 244.

The steering system 232 may be operated to adjust the heading direction of the vehicle 200. For example, in an implementation, the steering system 232 may be a steering wheel system.

The accelerator 234 is configured to control an operating speed of the engine 218 and further control the speed of the vehicle 200.

The brake unit 236 is configured to control the vehicle 200 to decelerate. The brake unit 236 may use a force of friction to slow the wheel 221. In other implementations, the brake unit 236 may convert kinetic energy of the wheel 221 into a current. The brake unit 236 may alternatively use another form to slow a rotation speed of the wheel 221 to control the speed of the vehicle 200.

The computer vision system 240 may be operated to process and analyze the images captured by the camera 230 to identify a target and/or a feature in the surrounding environment of the vehicle 200. The target and/or the feature may include a traffic signal, a road boundary, and an obstacle. The computer vision system 240 may use an object identification algorithm, a structure from motion (structure from motion, SFM) algorithm, a video tracking technology, and another computer vision technology. In some implementations, the computer vision system 240 may be configured to map an environment, track a target, estimate a speed of the target, and the like.

The route control system 242 is configured to determine a driving route of the vehicle 200. In some implementations, the route control system 242 may combine data from the sensor 238, the GPS 222, and one or more predetermined maps to determine the driving route for the vehicle 200.

The obstacle avoidance system 244 is configured to identify, assess, and avoid, or otherwise cross, a potential obstacle in the environment of the vehicle 200.

Certainly, in an instance, the control system 206 may add components or alternatively include components other than those shown and described. Alternatively, some of the components shown above may be reduced.

The vehicle 200 interacts with an external sensor, another vehicle, another computer system, or a user by using the peripheral device 208. The peripheral device 208 may include a wireless communications system 246, a vehicle-mounted computer 248, a microphone 250, and/or a speaker 252.

In some implementations, the peripheral device 208 provides a means for a user of the vehicle 200 to interact with the user interface 216. For example, the vehicle-mounted computer 248 may provide information to the user of the vehicle 200. The user interface 216 may further be used to operate the vehicle-mounted computer 248 to receive input from the user. The vehicle-mounted computer 248 may be operated by using a touchscreen. In other cases, the peripheral device 208 may provide a means for the vehicle 200 to communicate with another device located in the vehicle. For example, the microphone 250 may receive audio (for example, a voice command or another audio input) from the user of the vehicle 200. Similarly, the speaker 252 may output audio to the user of the vehicle 200.

The wireless communications system 246 may communicate wirelessly with one or more devices directly or via a communications network. For example, the wireless communications system 246 may use 3G cellular communications such as code division multiple access (code division multiple access, CDMA), EVD0, global system for mobile communications (global system for mobile communications, GSM)/general packet radio service (general packet radio service, GPRS), or 4G cellular communications such as long term evolution (long term evolution, LTE), or 5G cellular communications. The wireless communications system 246 may communicate with a wireless local area network (wireless local area network, WLAN) by using Wi-Fi. In some implementations, the wireless communications system 246 may communicate directly with a device by using an infrared link, Bluetooth, or ZigBee. Other wireless protocols such as various vehicle communications systems, for example, the wireless communications system 246 may include one or more dedicated short range communications (dedicated short range communications, DSRC) devices, which may include common and/or private data communication between the vehicle and/or a roadside station.

The power supply 210 may provide power to various components of the vehicle 200. In an implementation, the power supply 210 may be a rechargeable lithium ion or lead-acid battery. One or more battery packs of such battery may be configured as a power supply to supply power to various components of the vehicle 200. In some implementations, the power supply 210 and the energy source 219 may be implemented together, such as in some fully electric vehicles.

Some or all of functions of the vehicle 200 are controlled by the computer system 212. The computer system 212 may include at least one processor 223. The processor 223 executes an instruction 225 stored in a non-transitory computer-readable medium such as a memory 224. The computer system 212 may further control a plurality of computing devices in an individual component or subsystem of the vehicle 200 in a distributed manner.

The processor 223 may be any conventional processor, such as a commercially available central processing unit (central processing unit, CPU). Alternatively, the processor may be a dedicated device of an application-specific integrated circuit (application specific integrated circuit, ASIC) or another hardware-based processor. Although FIG. 2 functionally shows the processor, the memory, and other elements of the computer 210 in a same block, a person of ordinary skill in the art should understand that the processor, the computer, or the memory may actually include a plurality of processors, computers, or memories that may or may not be stored in a same physical housing. For example, the memory may be a hard disk drive or another storage medium located in a housing different from the computer 210. Thus, references to the processor or the computer will be understood as including references to a set of processors, computers, or memories that may or may not operate in parallel. Unlike using a single processor to perform the steps described herein, some components, such as a steering component and a deceleration component, may have respective processors. The processor performs only calculation related to component-specific functions.

In various aspects described herein, the processor may be remote from the vehicle and communicate wirelessly with the vehicle. In another aspect, some of processes described herein are performed by a processor disposed in the vehicle, and others are performed by a remote processor, including taking necessary steps to perform a single operation.

In some implementations, the memory 224 may include the instruction 225 (for example, program logic), and the instruction 225 may be executed by the processor 223 to perform various functions of the vehicle 200, including those functions described above. The memory 214 may also include additional instructions, including instructions to send data to, receive data from, interact with, and/or control one or more of the travel system 202, the sensor system 204, the control system 206, and the peripheral device 208.

In addition to the instruction 225, the memory 224 may further store data, such as a road map, route information, a position, a direction, and a speed that are of a vehicle, other such vehicle data, and other information. Such information may be used by the vehicle 200 and the computer system 212 during operation of the vehicle 200 in an autonomous, semi-autonomous, and/or manual mode.

The user interface 216 is configured to provide information to or receive information from the user of the vehicle 200. Optionally, the user interface 216 may include one or more input/output devices within a set of peripheral devices 208, such as the wireless communications system 246, the vehicle-mounted computer 248, the microphone 250, and the speaker 252.

The computer system 212 may control functions of the vehicle 200 based on input received from various subsystems (for example, the travel system 202, the sensor system 204, and the control system 206) and from the user interface 216. For example, the computer system 212 may use input from the control system 206 to control the steering unit 232 to avoid an obstacle detected by the sensor system 204 and the obstacle avoidance system 244. In some implementations, the computer system 212 may be operated to control many aspects of the vehicle 200 and its subsystems.

Optionally, one or more of the foregoing components may be separately installed or associated with the vehicle 200. For example, the memory 224 may partially or completely exist separately from the vehicle 200. The foregoing components may be communicatively coupled together in a wired and/or wireless manner.

Optionally, the foregoing components are merely examples. In actual application, components in the foregoing modules may be added or deleted based on an actual requirement. FIG. 2 should not be understood as a limitation on this implementation of this application.

A self-driving vehicle traveling on a road, such as the vehicle 200 above, may identify a target in its surrounding environment to determine adjustment to a current speed. The target may be another vehicle, a traffic control device, or another type of target. In some examples, each identified target may be considered independently and may be used to determine a to-be-adjusted speed for the self-driving vehicle based on characteristics of the target, such as its current speed, acceleration, and spacing from the vehicle.

Optionally, the self-driving vehicle 200 or a computing device associated with the self-driving vehicle 200 (for example, the computer system 212, the computer vision system 240, and the memory 224 of FIG. 2) may predict a behavior of the identified target based on the characteristics of the identified target and a state of the surrounding environment (for example, traffic, rain, and ice on a road). Optionally, all identified targets depend on each other's behaviors. Therefore, all the identified targets may be considered together to predict a behavior of a single identified target. The vehicle 200 can adjust its speed based on the predicted behavior of the identified target. In other words, the self-driving vehicle can determine, based on the predicted behavior of the target, a stable state to which the vehicle needs to be adjusted (for example, acceleration, deceleration, or stop). In this process, another factor may also be considered to determine the speed of the vehicle 200, such as a transverse position of the vehicle 200 on a traveling road, a curvature of the road, and proximity between static and dynamic targets.

In addition to providing an instruction to adjust the speed of the self-driving vehicle, the computing device may also provide an instruction to modify a steering angle of the vehicle 200, so that the self-driving vehicle follows a given track and/or maintains a safe transverse and longitudinal distance from a target (for example, a car in an adjacent lane on a road) near the self-driving vehicle.

The vehicle 200 may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in this implementation of this application.

In addition, it should also be noted that the radar system in this implementation of this application may be applied to a plurality of fields. For example, the radar system in this implementation of this application includes but is not limited to an in-vehicle radar, a roadside traffic radar, and an unmanned aerial vehicle radar.

It should be noted that, in this implementation of this application, "a plurality of" refer to two or more. In addition, it should be understood that, in descriptions of this application, terms such as "first" and "second" are merely used for distinguishing and description, but should not be understood as indicating or implying relative importance, or should not be understood as indicating or implying a sequence.

Based on this, this application provides a radar signal transmitting and receiving method. The method is applied to a MIMO radar. The MIMO radar includes a transmitter, a receiver, and a processing unit. The transmitter includes *N_{Tx}* transmit antennas, and the receiver includes *N_{Rx}* receive antennas. Both *N_{Tx}* and *N_{Rx}* are positive integers greater than or equal to 2. It should be understood that a specific structure of the MIMO radar may be shown in FIG. 1, or may not be limited to the specific structure of FIG. 1. This is not limited in this application.

The method includes the following steps.

Step 400: The processing unit determines configuration information of a measurement frame, where the configuration information of the measurement frame indicates a preset transmit sequence of the *N_{Tx}* transmit antennas, transmit duration *T_{c}* of each chirp signal, and a quantity *N_{slow}* of times that the *N_{Tx}* transmit antennas perform repeated transmission according to the preset transmit sequence.

For example, the configuration information of the measurement frame includes the preset transmit sequence of the *N_{Tx}* transmit antennas, *T_{c}*, and *N_{slow},* or the preset transmit sequence of the *N_{Tx}* transmit antennas, U**T_{c}*, and *N_{slow}.* It should be understood that a specific form of the configuration information of the measurement frame is not limited in this application.

After determining the configuration information of the measurement frame, the processing unit sends the configuration information of the measurement frame to a single MMIC or a plurality of MMICs by using an interface, where the single MMIC or the plurality of MMICs is or are used to enable the transmitter based on the configuration information of the measurement frame to send the measurement frame.

Step 410: The transmitter sends the measurement frame based on the configuration information of the measurement frame, where the measurement frame includes *U*N_{slow}* chirp signals, the *U*N_{slow}* chirp signals include *N_{slow}* groups of chirp signals, each group of chirp signals includes U chirp signals, the U chirp signals are respectively transmitted by the *N_{Tx}* transmit antennas in U timeslots according to the preset transmit sequence, and transmit duration *T_{c}* of each chirp signal is denoted as one timeslot; and a virtual receive array formed by the *N_{Tx}* transmit antennas and the *N_{Rx}* receive antennas includes overlapping elements whose transmit interval is *N₁* and overlapping elements whose transmit interval is *N₂, N₁*≠*N₂, N₁* is a positive integer, *N₂* is a positive integer, and *U* ≥ *N_{Tx}.*

For each group of chirp signals, a transmit antenna m1 transmits a chirp signal in a timeslot *u₁* of the U timeslots, a position of a virtual receive antenna element formed by the transmit antenna m1 and a receive antenna *n*1 is *d*_{*m*1*n*1}, a transmit antenna *m*1' transmits a chirp signal in a timeslot *u₁'* of the U timeslots, a position of a virtual receive antenna element formed by the transmit antenna *m*1' and a receive antenna *n*1' is *d*_{*m*1'*n*1'}, a transmit antenna *m*2 transmits a chirp signal in a timeslot *u₂* of the U timeslots, a position of a virtual receive antenna element formed by the transmit antenna *m*2 and a receive antenna *n*2 is *d*_{*m*2n2}, a transmit antenna *m*2' transmits a chirp signal in a timeslot *u₂'* of the U timeslots, a position of a virtual receive antenna element formed by the transmit antenna *m*2' and a receive antenna *n*2' is *d*_{*m*2'*n*2'}, the overlapping elements whose transmit interval is *N₁* meet *d*_{*m*1*n*1} = *d*_{*m*1'*n*1'}, and the overlapping elements whose transmit interval is *N₂* meet d_{*m*2*n*2} = *d*_{*m*2'*n*2'}, where |*u₁-u₁'*|*=N₁* and |*u₂-u₂'*|*=N₂*, *m*1, *n*1, *m*1', *n*1', *m*2, *n*2, *m*2', and *n*2' are all integers greater than or equal to 0, and *u₁, u₁', u₂,* and *u₂'* are all integers greater than or equal to 0.

The measurement frame may be an FMCW, or may use a waveform used by another MIMO radar. For example, the measurement frame may be a waveform such as a pulse waveform or an orthogonal frequency division multiplexing (Orthogonal Frequency Division Multiplex, OFDM). According to the claimed invention, the measurement frame includes chirp signals as discussed above.

This is not limited in this application. The following uses only the FMCW as an example for description.

In a possible design, *N₁* and *N₂* are relatively prime. For example, *N₁=*1, and *N₂=*2*.*

In a possible design, values of *N₁* and *N₂* are determined based on the antenna layout and the preset sequence. It may be understood that, because a smaller value of the transmit interval indicates a larger corresponding speed measurement range, a fewer times of aliasing may be implemented. Therefore, the values of *N₁* and *N₂* are generally relatively small.

In addition, in a possible design, the virtual receive array formed by the *N_{Tx}* transmit antennas and the *N_{Rx}* receive antennas includes overlapping elements whose transmit interval is *N₃*, *N₁*≠*N₂*≠*N₃,* and *N₃* is a positive integer. For example, *N₁=*1, *N₂=*2, and *N₃=*3*.*

The following briefly describes a method for determining the overlapping elements based on the preset transmit sequence and the antenna layout:
determining, based on the preset transmit sequence and the antenna layout, a position of a virtual receive antenna formed by the transmit antenna and the receive antenna.

Conventional virtual receive antenna (Virtual Receiver antenna): An antenna obtained by combining a transmit antenna and a receive antenna is a virtual receive antenna, which may also be described as that a transmit antenna and a receive antenna are combined to obtain a virtual receive array. A quantity of transmit antennas is *N_{Tx},* and a quantity of receive antennas is *N_{Rx}.* A coordinate position of a transmit antenna *Txᵢ* is represented as (*xᵢ, yᵢ*) in a two-dimensional plane, where 1 ≤ i ≤ *N_{Tx};* a coordinate position of a receive antenna *Rxᵢ* is represented as (*xᵢ, yᵢ*) in a two-dimensional plane, where 1 ≤ j ≤ *N_{Rx}*; and a total of *N_{Tx*}N_{Rx}* virtual elements may be obtained. To facilitate description of a transmit interval introduced by an antenna transmit sequence and virtual elements at a same position formed by repeated transmission of a same transmit antenna, in this application, U chirp signals are transmitted according to the preset transmit sequence, a transmit antenna m transmits a chirp signal in a timeslot u, and a position of a virtual element formed by the transmit antenna m performing transmission in the timeslot u and a receive antenna n is as follows: ${d}_{k} = {d}_{mn} = {\left({x}_{m}, {y}_{m}\right)}^{u} + {\left({x}_{n}, {y}_{n}\right)}^{u} = {\left({x}_{m}+{x}_{n},{y}_{m}+{y}_{n}\right)}^{u}$ where d*ₖ* represents a position of a virtual antenna formed by transmit antennas according to the preset transmit sequence and *N_{Rx}* receive antennas arranged in sequence. k = (u - 1) * N*_{Rx}* + *n_{Rx}*, 1 *≤ k ≤ U * N_{Rx,}* 1 ≤ *u* ≤ *U, 1* ≤ *n_{Rx}* ≤ *N_{Rx}*

A coordinate position of the transmit antenna m is represented as (*xₘ, yₘ*)*^{u}* in a two-dimensional plane, where 1≤*m*≤*N_{Tx}*, and a coordinate position of the receive antenna n is represented as (*xₙ, yₙ*)*^{u}* in a two-dimensional plane, where 1≤*n≤N_{Rx}.*
1) Virtual receive element pairs whose positions are repeated (that is, overlapping elements) are marked, and an interval of a transmit timeslot (that is, a transmit interval) of the overlapping elements is formed.
2) Overlapping elements of a same transmit interval are classified into one group. In this application, there are at least two groups of overlapping elements with different transmit intervals, and each group includes at least one pair of overlapping elements.

It should be noted that in the conventional technology, only overlapping elements whose transmit interval is 1 are included, only overlapping elements formed by hardware are included, and overlapping elements formed by a plurality of times of transmission performed by a same transmit antenna when U*>N_{Tx}* are not included.

A method for forming the overlapping elements may further be described herein in the following two manners, but is not limited to the following two manners:

Manner 1: Overlapping elements are formed by deployment of different antennas.

The overlapping elements formed by using manner 1 may also be referred to as overlapping elements on hardware.

Generally, virtual arrays are classified into a one-dimensional array and a two-dimensional array. A one-dimensional array refers to a case in which vertical Y-axis coordinate positions of all elements in a transmit antenna array are the same, and vertical Y-axis coordinate positions of all elements in a receive antenna array are the same. The one-dimensional array can be used to obtain only a horizontal angle of a target, that is, a horizontal array. A two-dimensional array refers to a case in which a position of at least one element is different from that of another element in Y-axis coordinates of all elements in a transmit antenna array, and a position of one element is different from that of another element in Y-axis coordinates of all elements in a receive antenna array. The two-dimensional array includes one or more one-dimensional subarrays.

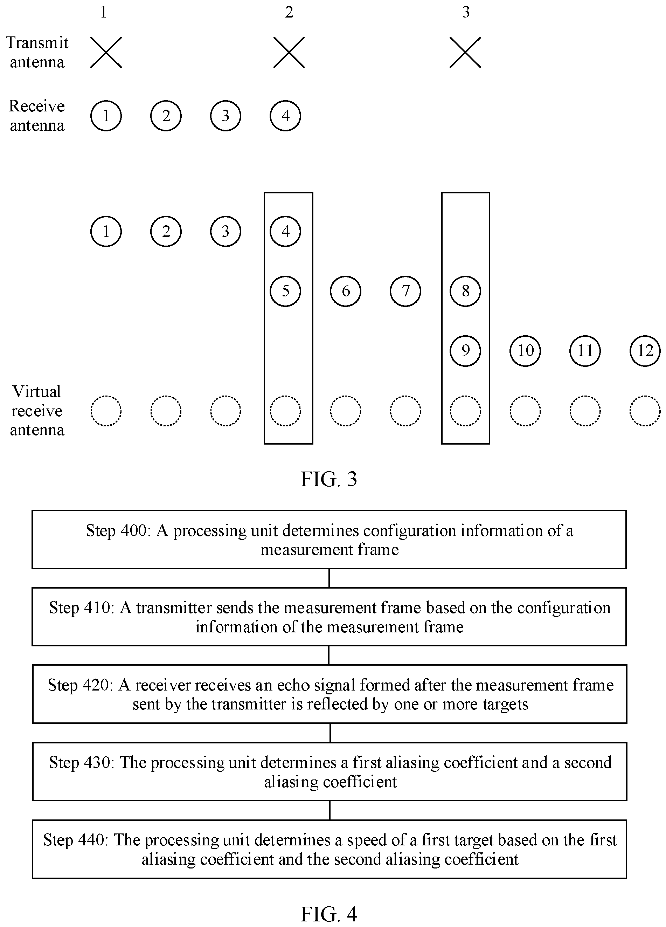

Herein, overlapping elements on hardware are described by using an example. FIG. 3 is a schematic diagram of two pairs of overlapping elements formed by a one-dimensional horizontal array with three transmit antennas and four receive antennas (referred to as 3 transmit 4 receive (3T4R)). A spacing between the transmit antennas is 3λ/2 of the horizontal array, and a spacing between the receive antennas is λ/2 of the horizontal array, where λ is a half wavelength. Because both the transmit antenna array and the receive antenna array are one-dimensional arrays, a position of the transmit antenna array may be written as *X_{Tx} =* [0, 3λ/2, 3*λ*], and a position of the receive antenna array may be written as *X_{Rx} =* [0, *λ*/2, *λ,* 3*λ*/2].

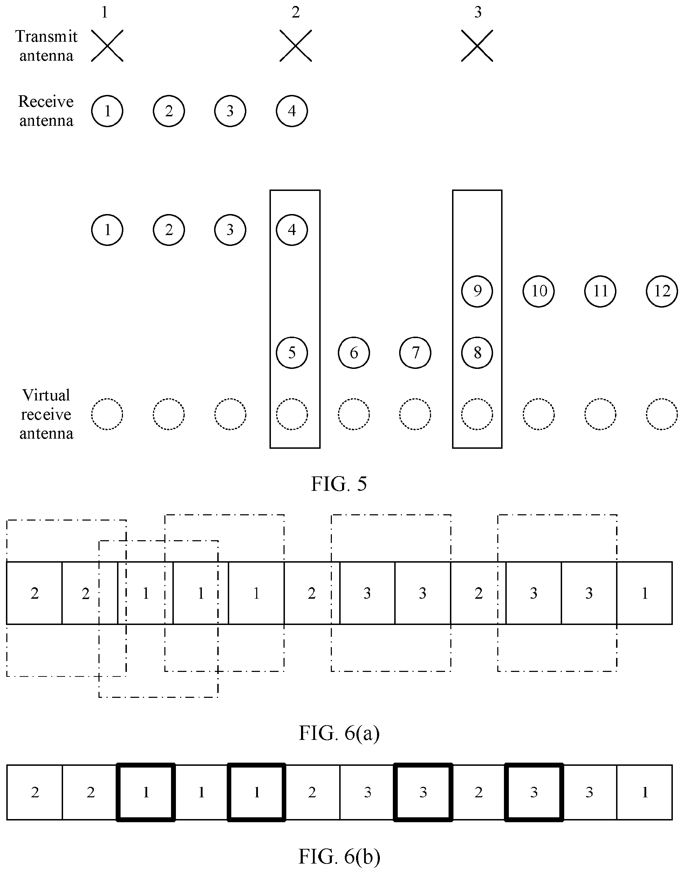

When a transmit sequence of the transmit antennas is 1, 2, and 3, U=3, and a virtual receive element position matrix D corresponding to *N_{Rx}* receive antennas in U timeslots may be obtained, D = [d*ₖ*], 1 ≤ *k ≤ U * N_{Rx}*, and D=[0, λ/2, λ, 3λ/2, 3λ/2, 2λ, 5λ/2, 3λ, 3λ, 7λ/2, 4λ, 9λ/2]. Overlapping elements whose transmit interval is 1 in a position of 3λ/2 and overlapping elements whose transmit interval is 1 in a position of 3λ exist in a virtual receive array formed by the three transmit antennas and the four receive antennas, that is, two pairs of overlapping elements are formed on a receive side, and transmit intervals of the two pairs of overlapping elements are the same and are both 1. As shown in FIG. 5, when the transmit sequence of the transmit antennas is 1, 3, 2, *D* = [0, *λ*/2, λ, 3λ/2, 3*λ*, 7λ/ 2,4*λ*, 9*λ*/2,3*λ*/2, 2*λ*, 5*λ*/2, 3*λ*. Overlapping elements whose transmit interval is 2 in a position of 3λ/2 and overlapping elements whose transmit interval is 1 in a position of 3λ exist in the virtual receive array. It can be learned that when the transmit sequence changes from 1, 2, and 3 to 1, 3, and 2, the change of the transmit sequence does not cause positions of the overlapping elements to change, and affects only the transmit interval.

Manner 2: Overlapping elements are formed by occupying different transmit moments by a same antenna.

In a possible design, at least one transmit antenna in the *N_{Tx}* transmit antennas transmits a chirp signal twice in the U transmit timeslots.

The overlapping elements formed in manner 2 may also be referred to as overlapping elements on software or soft overlapping elements.

For example, FIG. 6(a) to FIG. 6(c) show a possible transmit sequence of transmit antennas when *N_{Tx}=*3 and U=4*3 and a horizontal array with 3T4R is used as an example. Then, each antenna performs transmission four times. The transmit sequence is 2-2-1-1-1-2-3-3-2-3-3-1. It should be understood that the transmit sequence is merely an example, and is not limited in this application. The following describes the soft overlapping elements and a corresponding transmit interval based on FIG. 6(a) to FIG. 6(c).

It may be learned from FIG. 6(a) that, if the transmit antenna 2 performs two consecutive times of sending, four pairs of overlapping elements are formed on the receive side, and transmit intervals of the four pairs of overlapping elements are the same and are all 1. Similarly, as shown by a dashed line in FIG. 6(a), 20 pairs of overlapping elements, that is, 5*4=20, are formed on the receive side.

As shown in FIG. 6(b), 1 and 1 marked by a bold line form four pairs of overlapping elements on the receive side, and transmit intervals of the four pairs of overlapping elements are the same and are all 2. Similarly, 3 and 3 marked by a bold line form four pairs of overlapping elements on the receive side, and transmit intervals of the four pairs of overlapping elements are the same and are all 2.

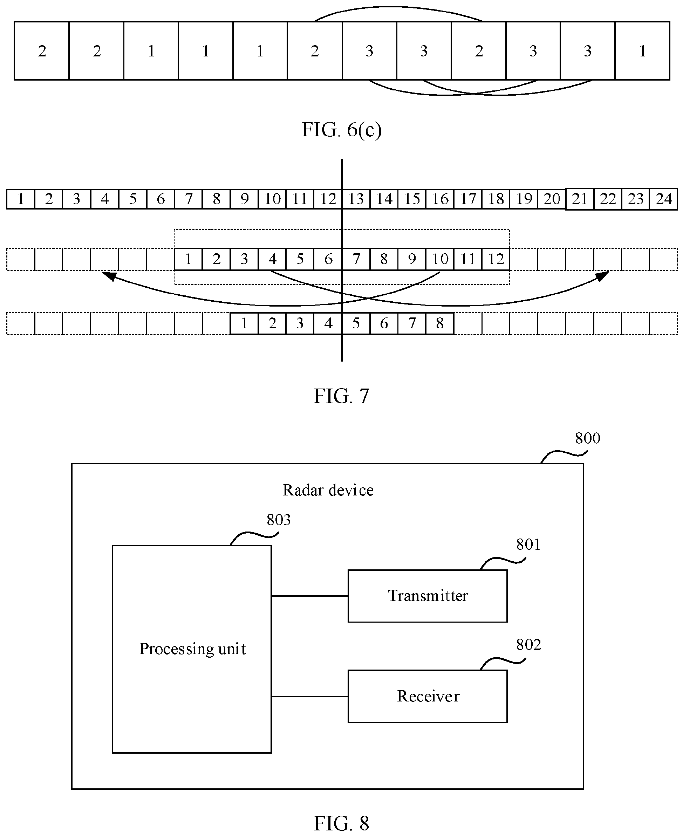

As shown in FIG. 6(c), 2 and 2 connected by a connection line form four pairs of overlapping elements on the receive side, and transmit intervals of the four pairs of overlapping elements are the same and are all 3. Similarly, two pairs of 3 and 3 connected by connection lines form 2*4 pairs of overlapping elements on the receive side, and transmit intervals of the eight pairs of overlapping elements are the same and are all 3.

It is to be noted that the soft overlapping elements do not cause loss of an aperture. Although a maximum speed measurement range corresponding to a maximum MIMO is reduced due to U*>N_{Tx}*, this method does not affect transmit duration Tc of each chirp. Therefore, a system can finally recover to the maximum test range determined by using the Tc and keep it unchanged. It may be understood that, if the two manners are combined, a quantity of overlapping elements may be further increased. The overlapping elements formed in manner 1 include the following: Overlapping elements whose transmit interval is 1 are successively as follows: The transmit antenna 2 and the transmit antenna 1 (represented by 2-1) form one pair of overlapping elements on the receive side, the transmit antenna 1 and the transmit antenna 2 (represented by 1-2) form one pair of overlapping elements on the receive side, the transmit antenna 3 and the transmit antenna 2 (represented by 3-2) form one pair of overlapping elements on the receive side, and the transmit antenna 2 and the transmit antenna 3 (represented by 2-3) form one pair of overlapping elements on the receive side. Overlapping elements whose transmit interval is 2 are successively as follows: The transmit antenna 2 and the one-antenna-spaced transmit antenna 1 (represented by 2-1-1) form one pair of overlapping elements on the receive side, the transmit antenna 1 and the one-antenna-spaced transmit antenna 2 (represented by 1-1-2) form one pair of overlapping elements on the receive side, the transmit antenna 3 and the one-antenna-spaced transmit antenna 2 (represented by 3-3-2) form one pair of overlapping elements on the receive side, and the transmit antenna 2 and the one-antenna-spaced transmit antenna 3 (represented by 2-3-3) form one pair of overlapping elements on the receive side.

In conclusion, it is summarized from the foregoing two manners that, overlapping elements whose transmit interval is 1 include 4+20=24 pairs, and overlapping elements whose transmit interval is 2 include 8+4=12 pairs. It should be noted that in practical engineering, if hardware overlapping elements cause loss of software overlapping elements, a part that is repeatedly calculated needs to be further ruled out, which is not limited in this application.

In addition, based on an actual requirement, a quantity of overlapping elements whose transmit interval is 3 and a quantity of overlapping elements whose transmit interval is another transmit interval may be further counted in the two manners. This is not limited in this application.

Therefore, in the design of the measurement frame provided in this implementation of this application, by using the preset transmit sequence of the *N_{Tx}* transmit antennas, overlapping elements with a plurality of transmit intervals can be constructed, and a quantity of overlapping elements can be increased. In the conventional technology, there are a relatively small quantity of overlapping elements and overlapping elements with a single transmit interval, when a phase difference between overlapping elements is greatly affected by noise, correct speed solving of a target is directly affected. However, in this implementation of this application, overlapping elements with a plurality of transmit intervals are constructed, and there are a relatively large quantity of overlapping elements. Even if phase differences between some of the overlapping elements are greatly affected by noise, phase differences between a plurality of overlapping elements with a plurality of transmit intervals may be processed, to effectively reduce impact, on speed solving, of the phase differences between the overlapping elements that are greatly affected by noise, thereby improving accuracy of speed solving of the target.

Step 420: The receiver receives an echo signal that is sent by the transmitter and that is formed after the measurement frame is reflected by one or more targets.

It should be noted that in this implementation of this application, the receiver includes *N_{Rx}* receive antennas. The *N_{Rx}* receive antennas receive *U* received signals according to the transmit sequence of the *N_{Tx}* transmit antennas, and then convert the received U received signals into echo signals based on a position relationship between the *N_{Tx}* transmit antennas and the *N_{Rx}* receive antennas and the transmit sequence of the transmit antennas.

Because *N_{slow}* is a quantity of times of repeated transmission according to the preset sequence, *N_{slow}* echo signals are obtained.

U represents a quantity of timeslots in which different antennas transmit signals in a repetition period according to a TDM manner, and a transmission period is *U*T_{c}*, where a same antenna may perform transmission a plurality of times in U timeslots. Further, one of the U received signals is a chirp signal formed after a transmitted chirp signal is reflected by one or more targets.

Step 430: The processing unit determines a first aliasing coefficient and a second aliasing coefficient.

The first aliasing coefficient is an aliasing coefficient corresponding to overlapping elements whose transmit interval is *N₁* and corresponding to a first target, the second aliasing coefficient is an aliasing coefficient corresponding to overlapping elements whose transmit interval is *N₂* and corresponding to the first target, and the first target is any target in the at least one target.

Generally, a single chirp signal is referred to as fast chirp (fast chirp), and distance information of a target may be obtained. A plurality of chirp signals are referred to as slow chirp (slow chirp), and speed information of the target may be obtained.

The processing unit calculates fast Fourier transformation in a distance dimension and corresponding to each fast chirp, and further, on a basis of fast chirp fft, calculates fast Fourier transformation in a speed dimension on different slow chirps on a same distance unit (Range bin) to obtain two-dimensional Fourier transformation results of U**N_{Rx}* virtual receive elements. For example, a two-dimensional Fourier transformation result of one virtual receive element refers to a range-Doppler map (Range-Doppler Map) corresponding to the virtual receive element. It may be understood that in this implementation of this application, *Nₛ* sampling points are obtained in one fast chirp, and *N_{range}-*point fast Fourier transformation in a distance dimension is performed. *N_{slow}* sampling points are obtained on the slow chirp, and *N_{doppler}*-point fast Fourier transformation in a speed dimension is performed, to obtain RD maps respectively corresponding to U**N_{Rx}* virtual receive elements.

The processing unit accumulates the two-dimensional Fourier transformation results of the U**N_{Rx}* virtual receive elements to obtain a total RD map. For example, accumulation of the two-dimensional Fourier transformation results of the U**N_{Rx}* virtual receive elements refers to accumulation of the RD maps respectively corresponding to the U**N_{Rx}* virtual receive elements to obtain a total RD map. Accumulation of the two-dimensional Fourier transformation results of the U**N_{Rx}* virtual receive elements may be performed by using incoherent superposition. To be specific, amplitudes of the two-dimensional Fourier of the U**N_{Rx}* virtual receive elements are superposed, or incoherent superposition is performed. That is, complex numbers of peaks synthesized on a fixed beam of the two-dimensional Fourier of the U**N_{Rx}* virtual receive elements are superposed, or in another superposition manner, which is not particularly limited in this application.

The RD map is a radar output map in which one dimension is distance information, and one dimension is Doppler information. A group of data extracted from the distance dimension is referred to data corresponding to a same distance unit (range bin), a group of data extracted from the Doppler dimension is referred to as data corresponding to a same Doppler bin (Doppler bin), and a group of data extracted from both the distance and Doppler dimensions is referred to as data corresponding to a same range-Doppler cell (Range-Doppler Cell).

Specifically, the processing unit detects a target on the total RD map. For example, the processing unit may perform detection by using various existing detection methods, for example, commonly used detection methods such as ordered statistic-constant false alarm rate (detection) (Ordered Statistic-Constant False Alarm Rate, OS-CFAR) or cell-averaging constant false alarm rate (detection) (Cell-Averaging Constant False Alarm Rate, CA-CFAR). This is not limited in this application.

After the processing unit detects a target on the total RD map, the processing unit extracts signals that are on the total RD map and that are of overlapping elements corresponding to the target. Signals that are on the total RD map and that are of overlapping elements corresponding to each target include signals that are on the total RD map and that are of overlapping elements whose transmit interval is *N₁* and signals that are on the total RD map and that are of overlapping elements whose transmit interval is *N₂.*

For example, the processing unit may determine the first aliasing coefficient in the following nonrestrictive manner, and the processing unit may determine the second aliasing coefficient in a same manner. Repeated content is not to be described.

Any overlapping element may be represented by using (m, n) and (m, n'), where *dₘₙ*=*d_{m'n'}*. A transmit antenna m transmits a chirp signal in a timeslot u of U timeslots, a position of a virtual receive antenna element formed by the transmit antenna m and a receive antenna *n* is *dₘₙ*, a transmit antenna *m*' transmits a chirp signal in a timeslot *u*' of the U timeslots, a position of a virtual receive antenna element formed by the transmit antenna *m*' and a receive antenna *n*' is *d*_{*m'n*'}, |u - u'| = N*ᵢᵢ*, and a transmit interval corresponding to the overlapping elements is *Nᵢᵢ.*

The transmit antenna m transmits a chirp signal in the timeslot u of the U timeslots. If a waveform of the signal is represented as S(t), after the signal is reflected by a target whose distance is R*ᵢ*, radial speed is V*ᵢ*, and horizontal angle (the horizontal angle is used as an example) is θ*ᵢ*, data of the virtual receive element formed by the transmit antenna m and the receive antenna n corresponds to data that is in the RD map and whose target distance and aliased speed are (*Ri_{nd}, V_{ind}*)*.* The measured target distance may be represented as *R̅ᵢ* = *R_{ind}* * *R_{Res}*, and *R_{Res}* is distance resolution. In an RD map corresponding to the virtual receive element, a complex number value ${S}_{mn}^{u}$ in an RD unit corresponding to (*R_{ind,} V_{ind}*) is selected, and a phase ${φ}_{i}^{mn}$ of the complex number value may be represented as: ${φ}_{i}^{mn} = 2 π \left(\frac{2 {V}_{i} {uT}_{c}}{λ}+\frac{{d}_{mn} {sinθ}_{i}}{λ}\right) , λ = \frac{c}{{f}_{c}}$

Therefore, for any overlapping element (m, n) and (m', n'), *dₘₙ=d_{m'n'}*, when the speed of the target is zero, ${φ}_{i}^{mn} - {φ}_{i}^{m ′ n ′} = 0$. When a transmit interval corresponding to the overlapping elements is *Nᵢᵢ*, that is, |u - u'| = N*ᵢᵢ*, and the speed of the target is not zero, a relationship between a phase difference $angle \left({φ}_{i}^{mn}-{φ}_{i}^{m ′ n ′}\right)$ and a radial speed of the target is obtained through transformation of formula 2 and is ${V}_{i _ overlap}^{{N}_{ii}} = angle \left({φ}_{i}^{mn}-{φ}_{i}^{m ′ n ′}\right) λ / \left(4π\left(u-u′\right){T}_{c}\right) = angle \left({φ}_{i}^{mn}-{φ}_{i}^{m ′ n ′}\right) λ / \left(4{πN}_{ii}{T}_{c}\right)$ , and *u* > *u*' without loss of generality.

It may be understood that, ${V}_{i _ overlap}^{{N}_{ii}} = {V}_{i _ amb} + 2 ∗ {k}_{{N}_{ii}} ∗ {V}_{max}$ and *Vₘₐₓ = λ*/(4 * *U * T_{c}*) (formula 3)

*V_{i_amb}* is an aliased speed obtained through the total RD map, that is, *V̅ᵢ* = *V_{i_amb}* = *V_{ind}* * *V_{Res}*, and *V_{Res}* is speed resolution. Further, according to $angle \left({S}_{mn}^{u}∗conj\left\{{S}_{m ′ n ′}^{u ′}∗exp\left[j4πTc∗\left({V}_{{i}_{amb}}+2∗{k}_{{N}_{ii}}∗{V}_{max}\right)\right]\right\}\right.$, values in a range of *k_{Nᵢᵢ}* may be traversed so that *k_{Nᵢᵢ}* closest to 0 in the expression is used as the aliasing coefficient. ${S}_{mn}^{u}$ is a signal corresponding to *dₘₙ* in the RD map corresponding to the virtual receive element, ${S}_{m ′ n ′}^{u}$ is a signal corresponding to *d_{m'n'}* in the RD map corresponding to the virtual receive element, and the value range of *k_{Nᵢᵢ}* is determined based on a transmit interval *Nᵢᵢ*.

Further, an average value of *k_{Nᵢᵢ}* is separately obtained based on all overlapping elements whose transmit interval is *Nᵢᵢ*, and is used as an aliasing coefficient corresponding to overlapping elements whose transmit interval is *Nᵢᵢ* and corresponding to the target.

It should be understood that another solution may alternatively be used to determine the first aliasing coefficient and the second aliasing coefficient, which is not limited in this application.

Step 440: The processing unit determines a speed of the first target based on the first aliasing coefficient and the second aliasing coefficient.

In a possible design, the processing unit may determine the speed of the first target by using, but not limited to, the following methods:

First, the processing unit determines a first aliasing coefficient range based on *N₁,* and determines a second aliasing coefficient range based on *N₂.*

Speed measurement ranges corresponding to overlapping elements with different transmit intervals are different. To be specific, speed measurement ranges of overlapping elements that are adjacently sent in time (to be specific, a transmit interval is 1), namely, |u - u'| = N*ᵢᵢ* = 1, are ±Vₘₐₓ = λ/(4 * T_{C}). Speed measurement ranges corresponding to overlapping elements whose transmit interval is N*ᵢᵢ* are ±Vₘₐₓ = λ/(4 * N*ᵢᵢ* * T_{C}). A speed measurement range corresponding to a MIMO radar whose transmit period is U is ±Vₘₐₓ = λ/(4 * U * T_{C}), where *U*≥*N_{Tx}.*

It may be understood that overlapping elements whose transmit interval is 1 may obtain U times of expansion of the speed of the target, compared with the MIMO radar whose transmit period is U, and the aliasing coefficient has U values. Overlapping elements whose transmit interval is N*ᵢᵢ* may obtain U/N*ᵢᵢ* times of expansion of the speed of the target, compared with the MIMO radar whose transmit period is U, and an aliasing coefficient corresponding to the overlapping elements whose transmit interval is N*ᵢᵢ* has U/N*ᵢᵢ* values. The aliasing coefficient may use 1, 2, ..., and U/N*ᵢᵢ*, which specifically indicate multiples of aliasing 0, 1, ..., and U/N*ᵢᵢ* - 1. 0 indicates that there is no overlapping. A positive or negative relationship of a vehicle environment speed may be converted after a plurality of groups of N*ᵢᵢ* or may be converted here. An example of this application is merely described by using conversion after a plurality of groups of N*ᵢᵢ* as an example.

Therefore, it may be understood that an aliasing coefficient range corresponding to overlapping elements whose transmit interval is *N₁* may be 0, 1, ..., U/*(N₁-1),* and an aliasing coefficient range corresponding to overlapping elements whose transmit interval is *N₂* is 0, 1, ..., U/(*N₂-1*)*.*

Then, the processing unit determines the first aliasing coefficient set based on the first aliasing coefficient range, the first aliasing coefficient, and *N₁,* and determines the second aliasing coefficient set based on the second aliasing coefficient range, the second aliasing coefficient, and *N₂.*

The first aliasing coefficient set includes a possible aliasing coefficient that converts the first aliasing coefficient to a third aliasing coefficient range, the second aliasing coefficient set includes a possible aliasing coefficient that converts the second aliasing coefficient to the third aliasing coefficient range, and the third aliasing coefficient range is an aliasing coefficient range corresponding to overlapping elements whose transmit interval is 1.

It can be learned from above that ${V}_{i _ overlap}^{{N}_{ii}} = {V}_{i _ amb} + 2 ∗ {k}_{{N}_{ii}} ∗ {V}_{max}$${V}_{i _ overlap}^{{N}_{ii}}$ value ranges corresponding to overlapping elements with different transmit intervals are different, and *V_{i_amb}* corresponding to overlapping elements with different transmit intervals is the same. Therefore, there is a conversion relationship between aliasing coefficients *k_{Nᵢᵢ}* corresponding to overlapping elements with different transmit intervals. To reduce impact of noise on overlapping elements, aliasing coefficients corresponding to overlapping elements with different transmit intervals cannot be directly added for averaging or weighted averaging.

For example, when *Nᵢᵢ* > 1, a method for converting an aliasing coefficient corresponding to overlapping elements whose transmit interval is *Nᵢᵢ* to an aliasing coefficient range corresponding to overlapping elements whose transmit interval is 1 is as follows: $k = {k}_{{N}_{ii}} + j ∗ \frac{U}{{N}_{ii}} , j ∈ 0 , 1 , … , {N}_{ii} - 1 ,$ *where Nᵢᵢ* is an odd number $k = \left\{\begin{matrix}{k}_{{N}_{ii}} + \left(2∗j-1\right) ∗ \frac{U}{2 {N}_{ii}} , j ∈ 0 , 1 , … , {N}_{ii} - 1 , where {N}_{ii} is an even number , {k}_{{N}_{ii}} > \frac{U}{2 {N}_{ii}} \\ {k}_{{N}_{ii}} + \left(2∗j+1\right) ∗ \frac{U}{2 {N}_{ii}} , j ∈ 0 , 1 , … , {N}_{ii} - 1 , where {N}_{ii} is an even number , {k}_{{N}_{ii}} \leq \frac{U}{2 {N}_{ii}}\end{matrix}\right.$

*Nᵢᵢ* represents a transmit interval, and *k_{Nᵢᵢ}* is an aliasing coefficient corresponding to overlapping elements whose transmit interval is *Nᵢᵢ. k* is an aliasing coefficient obtained by converting the aliasing coefficient corresponding to the overlapping elements whose transmit interval is *Nᵢᵢ.* When *Nᵢᵢ* > 1, j has a plurality of values. Therefore, a plurality of values of k are also referred to as an aliasing coefficient set, that is, a set of an aliasing coefficient that is corresponding to overlapping elements whose transmit interval is 1 and that is converted from the aliasing coefficient corresponding to the overlapping elements whose transmit interval is *Nᵢᵢ.*

Next, the processing unit determines a third aliasing coefficient and a fourth aliasing coefficient based on the first aliasing coefficient set and the second aliasing coefficient set. The third aliasing coefficient is one aliasing coefficient in the first aliasing coefficient set, and the fourth aliasing coefficient is one aliasing coefficient in the second aliasing coefficient set.

A difference between the third aliasing coefficient and the fourth aliasing coefficient is a minimum value of a difference between any aliasing coefficient in the first aliasing coefficient set and any aliasing coefficient in the second aliasing coefficient set.

Further, the processing unit processes the third aliasing coefficient and the fourth aliasing coefficient.

In an example, the processing unit calculates an average value of the third aliasing coefficient and the fourth aliasing coefficient.

In another example, the processing unit calculates a weighted average value of the third aliasing coefficient and the fourth aliasing coefficient. For example, weights respectively corresponding to the third aliasing coefficient and the fourth aliasing coefficient may be determined based on quantities of overlapping elements with different transmit intervals, a signal-to-noise ratio on a channel, and the like.

Example 1: As shown in FIG. 7, when *N₁=*1, *N₂=*2, *N₃=*3, and U=24, an aliasing coefficient range corresponding to overlapping elements whose transmit interval is 1 is 1, 2, 3, ..., and 24, an aliasing coefficient range corresponding to overlapping elements whose transmit interval is 2 is 1, 2, 3, ..., and 12, and an aliasing coefficient range corresponding to overlapping elements whose transmit interval is 3 is 1, 2, 3, ..., and 8. The following uses a target 1 as an example to describe a conversion process of an aliasing coefficient corresponding to overlapping elements with different transmit intervals and corresponding to the target 1.

When *k*₁=13, and *N₁=*1, *k*=k₁. The aliasing coefficient is an aliasing coefficient corresponding to overlapping elements whose transmit interval is 1. Therefore, conversion is not required.

*k*₂=5, and *N₂*=2, which is an even number. Because *k*₂ is less than 6, k=11 or 23.

Specifically, there may be two cases: no aliasing or one time of aliasing. If there is no aliasing, k=5+12/2=11, and if there is one time of aliasing, *k*=5+3*12/2=23.

*k₃=*4, and *N₃=*3, which is an odd number. Then, *k*=4, 12, or 20.

Specifically, there may be three cases: no aliasing, one time of aliasing, and two times of aliasing. If there is no aliasing, k=4+0*24/3=4, if there is one time of aliasing, k=4+1*24/3=12, and if there are two times of aliasing, k=4+2*24/3=20.

Further, after the foregoing three aliasing coefficients corresponding to overlapping elements with different transmit intervals are converted, a difference among the three is the smallest when k=13, k=11, and k=12. In this case, the three values are averaged, to be specific, (13+12+11)/3=12.

It may be understood that, if there are no overlapping elements formed by adjacently transmitted signals in an antenna array and a transmit sequence, conversion may be performed by using a similar method.

Example 2: When *N₁=*2, *N₂=*3, and U=24, an aliasing coefficient range corresponding to overlapping elements whose transmit interval is 2 is 1, 2, 3, ..., and 12, and an aliasing coefficient range corresponding to overlapping elements whose transmit interval is 3 is 1, 2, 3, ..., and 8. The following uses a target 1 as an example to describe a conversion process of an aliasing coefficient corresponding to overlapping elements with different transmit intervals and corresponding to the target 1.

*k*₂=5, and *N₁=*2, which is an even number. Because *k*₂ is less than 6, *k*=11 or 23.

Specifically, there may be two cases: no aliasing or one time of aliasing. If there is no aliasing, *k*=5+12/2=11, and if there is one time of aliasing, *k*=5+3*12/2=23.

*k₃=*4, and *N₂*=3, which is an odd number. Then, *k*=4, 12, or 20.

Specifically, there may be three cases: no aliasing, one time of aliasing, and two times of aliasing. If there is no aliasing, *k*=4+0*24/3=4, if there is one time of aliasing, *k*=4+1*24/3=12, and if there are two times of aliasing, *k*=4+2*24/3=20.

Further, after the foregoing two aliasing coefficients corresponding to overlapping elements with different transmit intervals are converted, a difference between the two values is the smallest when *k*=11 and *k*=12. In this case, the foregoing two values are averaged and rounded off, to be specific, round((12+11)/2)=12.

Therefore, by converting aliasing coefficients respectively corresponding to overlapping elements with a plurality of transmit intervals, and processing converted aliasing coefficients, aliasing coefficients in an aliasing coefficient range corresponding to overlapping elements whose transmit interval is 1 are obtained, and an aliased speed of the first target is restored to the maximum speed measurement range determined by using Tc.

In addition, it should be understood that, because the speed may be defined as positive or negative, when *U* is an odd number, the aliasing coefficient range is [*-U*/2, *U*/2], and when U is an even number, the aliasing coefficient range is [-*U*/2, *U*/2).

The following parameters are further solved: $doppler \left|{nd}_{umamb}=doppler\right| {nd}_{amb} + \left(k-\left⌊\frac{U}{2}\right⌋\right) ∗ {N}_{doppler} k ∈ 1 , 2 , U$ is an odder number $doppler \left|{nd}_{umamb}=doppler\right| {nd}_{amb} + \left(k-\left⌊\frac{U}{2}\right⌋-1\right) ∗ {N}_{doppler}$ $k ∈ 1 , 2 , U , where U is an even number , {dopplerInd}_{amb} > \frac{Ndoppler}{2}$ $doppler {| nd}_{umamb} = doppler | {nd}_{amb} + \left(k-\left⌊\frac{U}{2}\right⌋\right) ∗ {N}_{doppler}$ $k ∈ 1 , 2 , U ,$ *where U* is an even number, ${dopplerInd}_{amb} \leq \frac{Ndoppler}{2}$ where *dopplerInd_{amb}* represents a Doppler identifier *V_{ind}* that is of the first target detected in the total RD map and that is obtained after aliasing, and *N_{doppler}* represents a Doppler dimension of the RD map. In this way, the aliased speed may be extended to a value in an entire U**N_{doppler}* range, and i represents an aliasing coefficient obtained by the first target by using overlapping elements with a plurality of groups of transmit intervals. For example, i is an average value obtained based on k corresponding to the three different transmit intervals in Example 1. The processing unit obtains the speed of the first target based on obtained *dopplerInd_{umamb}* and speed resolution. It may be understood that, *N_{doppler}* is greater than or equal to *N_{slow}*, and exceeded data is usually filled by using zero-padding.

As shown in FIG. 8, an implementation of this application further provides a radar device 800. The radar device is a MIMO radar. The MIMO radar includes a transmitter 801, a receiver 802, and a processing unit 803. The transmitter includes *N_{Tx}* transmit antennas, and the receiver includes *N_{Rx}* receive antennas. Both *N_{Tx}* and *N_{Rx}* are positive integers greater than or equal to 2. The radar device 800 is configured to perform the foregoing method shown in FIG. 4.

In conclusion, in the method provided in the implementation of this application, a preset transmit sequence of *N_{Tx}* transmit antennas may be used to construct overlapping elements with a plurality of transmit intervals and increase a quantity of overlapping elements. When a speed of each target is being solved, aliasing coefficients respectively corresponding to overlapping elements with a plurality of transmit intervals may be calculated based on the overlapping elements with a plurality of transmit intervals and a relatively large quantity of overlapping elements. Even if phase differences between some of the foregoing overlapping elements are greatly affected by noise, and solving of corresponding aliasing coefficients is incorrect, solving the speed of the target based on the aliasing coefficients respectively corresponding to the overlapping elements with a plurality of transmit intervals can effectively reduce impact, on speed solving, of aliasing coefficients corresponding to the overlapping elements greatly affected by noise, thereby improving accuracy of speed solving of the target. In addition, the foregoing method does not cause a loss of a virtual antenna aperture.

A person skilled in the art should understand that implementations of this application may be provided as a method, a system, or a computer program product. Therefore, implementations of this application may use a form of hardware only implementations, software only implementations, or implementations with a combination of software and hardware. Moreover, implementations of this application may use a form of a computer program product that is implemented on one or more computer-usable storage media (including but not limited to a disk memory, a CD-ROM, an optical memory, and the like) that include computer-usable program code.

Implementations of this application are described with reference to the flowcharts and/or block diagrams of the method, the device (system), and the computer program product according to implementations of this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus configured to implement a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps used to implement a specific function in one or more procedures in the flowcharts and/or in one or more blocks in the block diagrams.

The scope of protection is defined by the appended claims.

## Claims

1. A radar signal transmitting and receiving
method, applied to a multiple-input multiple-output, MIMO radar, wherein the MIMO radar comprises a transmitter and a receiver, the transmitter comprises *N_{Tx}* transmit antennas, the receiver comprises *N_{Rx}* receive antennas, and both *N_{Tx}* and *N_{Rx}* are positive integers greater than or equal to 2; and the method comprises:
determining (S400) configuration information of a measurement frame, wherein the configuration information of the measurement frame indicates a preset transmit sequence of the *N_{Tx}* transmit antennas, transmit duration *T_{c}* of each chirp signal, and a quantity *N_{slow}* of times that the *N_{Tx}* transmit antennas perform repeated transmission according to the preset transmit sequence; and
sending (S410) the measurement frame based on the configuration information of the measurement frame, wherein the measurement frame comprises *U*N_{slow}* chirp signals, the *U*N_{slow}* chirp signals comprise *N_{slow}* groups of chirp signals, each group of chirp signals comprises U chirp signals, the U chirp signals are respectively transmitted by the *N_{Tx}* transmit antennas in U timeslots according to the preset transmit sequence, and transmit duration *T_{c}* of each chirp signal is denoted as one timeslot; and a virtual receive array formed by the *N_{Tx}* transmit antennas and the *N_{Rx}* receive antennas comprises overlapping elements whose transmit interval is *N₁* and overlapping elements whose transmit interval is *N₂, N₁*≠*N₂*, *N₁* is a positive integer, *N₂* is a positive integer, and *U* ≥ *N_{Tx}*;
wherein for each group of chirp signals, a transmit antenna *m*1 transmits a chirp signal in a timeslot *u₁* of the U timeslots, a position of a virtual receive antenna element formed by the transmit antenna *m*1 and a receive antenna *n*1 is *d*_{*m*1*n*1}, a transmit antenna *m*1' transmits a chirp signal in a timeslot *u₁'* of the U timeslots, a position of a virtual receive antenna element formed by the transmit antenna *m*1' and a receive antenna *n*1' is *d*_{*m*1'*n*1'}, a transmit antenna *m*2 transmits a chirp signal in a timeslot *u₂* of the U timeslots, a position of a virtual receive antenna element formed by the transmit antenna *m*2 and a receive antenna *n*2 is *d*_{*m*2n2}, a transmit antenna *m*2' transmits a chirp signal in a timeslot *u₂'* of the U timeslots, a position of a virtual receive antenna element formed by the transmit antenna *m*2' and a receive antenna *n*2' is *d*_{*m*2'*n*2'}, the overlapping elements whose transmit interval is *N₁* meet *d*_{*m*1*n*1} = *d*_{*m*1'*n*1'}, and the overlapping elements whose transmit interval is *N₂* meet *d*_{*m*2*n*2} = *d*_{*m*2'*n*2'}; and
|*u₁-u₁'*|*=N₁* and |*u₂-u₂'*|*=N₂*, *m*1, *n*1, *m*1', *n*1', *m*2, *n*2, *m*2', and *n*2' are all integers greater than or equal to 0, and *u₁*, *u₁'*, *u₂*, and *u₂'* are all integers greater than or equal to 0.

2. The method according to claim 1, wherein at least one transmit antenna in the *N_{Tx}* transmit antennas transmits a chirp signal twice in the U timeslots.

3. The method according to claim 1 or 2, wherein the virtual receive array formed by the *N_{Tx}* transmit antennas and the *N_{Rx}* receive antennas comprises overlapping elements whose transmit interval is *N₃, N₁*≠*N₂*≠*N₃*, and *N₃* is a positive integer.

4. A radar device, wherein the device is a MIMO radar, the MIMO radar comprises a transmitter, a receiver, and a processing unit, the transmitter comprises *N_{Tx}* transmit antennas, the receiver comprises *N_{Rx}* receive antennas, and both *N_{Tx}* and *N_{Rx}* are positive integers greater than or equal to 2; wherein the transmitter, the receiver, and the processing unit are adapted to execute the method according to any one of claims 1 to 3.

## Patentansprüche

1. Verfahren zum Senden und Empfangen von Radarsignalen, das auf ein Radar mit mehreren Eingängen und mehreren Ausgängen, MIMO-Radar, angewendet wird, wobei das MIMO-Radar einen Sender und einen Empfänger umfasst, der Sender *N_{Tx}* Sendeantennen umfasst, der Empfänger *N_{Rx}* Empfangsantennen umfasst, und sowohl *N_{Tx}* als auch *N_{Rx}* positive ganze Zahlen größer oder gleich 2 sind; und das Verfahren Folgendes umfasst:
Bestimmen (S400) von Konfigurationsinformationen eines Messrahmens, wobei die Konfigurationsinformationen des Messrahmens eine voreingestellte Sendesequenz der *N_{Tx}* Sendeantennen, eine Sendedauer *T_{c}* jedes Chirp-Signals und eine Anzahl *N_{langsam}* von Malen angeben, welche die *N_{Tx}* Sendeantennen eine wiederholte Übertragung gemäß der voreingestellten Sendesequenz durchführen; und
Senden (S410) des Messrahmens basierend auf den Konfigurationsinformationen des Messrahmens, wobei der Messrahmen *U*N_{langsam}* Chirp-Signale umfasst, die *U*N_{langsam}* Chirp-Signale *N_{langsam}* Gruppen von Chirp-Signalen umfassen, jede Gruppe von Chirp-Signalen U Chirp-Signale umfasst, die U Chirp-Signale jeweils durch die *N_{Tx}* Sendeantennen in U Zeitschlitzen gemäß der voreingestellten Sendefolge gesendet werden, und eine Sendedauer *T_{c}* von jedem Chirp-Signal als ein Zeitschlitz bezeichnet wird;
und ein virtuelles Empfangsarray, das durch die *N_{Tx}* Sendeantennen und die *N_{Rx}* Empfangsantennen ausgebildet wird, überlappende Elemente umfasst, deren Sendeintervall *N₁* ist, und überlappende Elemente, deren Sendeintervall *N₂* ist, *N₁* ≠ *N₂*, wobei *N₁* eine positive ganze Zahl ist, *N₂* eine positive ganze Zahl ist und *U* ≥ *N_{Tx}*;
wobei eine Sendeantenne *m*1 für jede Gruppe von Chirp-Signalen ein Chirp-Signal in einem Zeitschlitz *u₁* der U Zeitschlitze sendet, eine Position eines virtuellen Empfangsantennenelements, das durch die Sendeantenne *m*1 und eine Empfangsantenne *n*1 ausgebildet wird, *d*_{*m*1*n*1} ist, eine Sendeantenne *m*1' ein Chirp-Signal in einem Zeitschlitz *u₁*' der U Zeitschlitze sendet, eine Position eines virtuellen Empfangsantennenelements, das durch die Sendeantenne *m*1' und
eine Empfangsantenne *n*1' ausgebildet wird, *d*_{*m*1'*n*1'} ist, eine Sendeantenne *m*2 ein Chirp-Signal in einem Zeitschlitz *u₂* der U Zeitschlitze sendet, eine Position eines virtuellen Empfangsantennenelements, das durch die Sendeantenne *m*2 und eine Empfangsantenne *n*2 ausgebildet wird, *d*_{*m*2*n*2} ist, eine Sendeantenne *m*2' ein Chirp-Signal in einem Zeitschlitz *u₂*' der U Zeitschlitze sendet, eine Position eines virtuellen Empfangsantennenelements, das durch die Sendeantenne *m*2' und
eine Empfangsantenne *n*2' ausgebildet wird, *d*_{*m*2*'n*2'} ist, die überlappenden Elemente, deren Sendeintervall *N₁* ist, *d*_{*m*1*n*1} = *d*_{*m*1'*n*1'} erfüllen, und die überlappenden Elemente, deren Sendeintervall *N₂* ist, *d*_{*m*2*n*2} = *d*_{*m*2*n*2'} erfüllen; und
|*u₁*-*u₁'*| = *N*₁ und |*u₂*-*u₂'*| = *N₂*, *m*1, *n*1, *m*1', *n*1', *m*2, *n*2, *m*2' und *n*2' alle ganze Zahlen größer oder gleich 0 sind, und *u₁*, *u₁'*, *u₂* und *u₂'* alle ganze Zahlen größer oder gleich 0 sind.

2. Verfahren nach Anspruch 1, wobei mindestens eine Sendeantenne in den *N_{Tx}* Sendeantennen zweimal ein Chirp-Signal in den U Zeitschlitzen sendet.

3. Verfahren nach Anspruch 1 oder 2, wobei das virtuelle Empfangsarray, das durch die *N_{Tx}* Sendeantennen und die *N_{Rx}* Empfangsantennen ausgebildet wird, überlappende Elemente umfasst, deren Sendeintervall *N₃* ist, *N₁* ≠ *N₂* ≠ *N₃* und *N₃* eine positive ganze Zahl ist.

4. Radarvorrichtung, wobei die Vorrichtung ein MIMO-Radar ist, das MIMO-Radar einen Sender, einen Empfänger und eine Verarbeitungseinheit umfasst, der Sender *N_{Tx}* Sendeantennen umfasst, der Empfänger *N_{Rx}* Empfangsantennen umfasst, und sowohl *N_{Tx}* als auch *N_{Rx}* positive ganze Zahlen größer oder gleich 2 sind; wobei der Sender, der Empfänger und die Verarbeitungseinheit geeignet sind, um das Verfahren nach einem der Ansprüche 1 bis 3 ausführen.

## Revendications

1. Procédé d'émission et de réception de signal radar, appliqué à un radar à entrées et sorties multiples, MIMO, dans lequel le radar MIMO comprend un émetteur et un récepteur, l'émetteur comprend *N_{Tx}* antennes d'émission, le récepteur comprend *N_{Rx}* antennes de réception, et *N_{Tx}* et *N_{Rx}* sont tous deux des entiers positifs supérieurs ou égaux à 2 ; et le procédé comprend :
la détermination (S400) des informations de configuration d'une trame de mesure, dans lequel les informations de configuration de la trame de mesure indiquent une séquence d'émission prédéfinie des *N_{Tx}* antennes d'émission, une durée d'émission *T_{c}* de chaque signal chirp, et une quantité *N_{slow}* de fois où les *N_{Tx}* antennes d'émission effectuent une transmission répétée selon la séquence d'émission prédéfinie ; et
l'envoi (S410) de la trame de mesure sur la base des informations de configuration de la trame de mesure, dans lequel la trame de mesure comprend *U*N_{slow}* signaux chirp, les *U*N_{slow}* signaux chirp lents comprennent *N_{slow}* groupes de signaux chirp, chaque groupe de signaux chirp comprend U signaux chirp, les U signaux chirp sont respectivement transmis par les *N_{Tx}* antennes d'émission dans U intervalles de temps selon la séquence d'émission prédéfinie,
et la durée d'émission *T_{c}* de chaque signal chirp est désignée comme un intervalle de temps ; et un réseau de réception virtuel formé par les *N_{Tx}* antennes d'émission et les *N_{Rx}* antennes de réception comprend des éléments superposés dont l'intervalle d'émission est *N₁* et des éléments superposés dont l'intervalle d'émission est *N₂*, *N₁*≠*N₂*, *N₁* est un entier positif, *N₂* est un entier positif, et *U* ≥ *N_{Tx}* ;
dans lequel, pour chaque groupe de signaux chirp, une antenne d'émission *m*1 émet un signal chirp dans un intervalle de temps *u₁* parmi les U intervalles de temps, une position d'un élément d'antenne de réception virtuelle formé par l'antenne d'émission *m*1 et une antenne de réception *n*1 est *d*_{*m*1*n*1}, une antenne d'émission *m*1' émet un signal chirp dans un intervalle de temps *u₁*' parmi les U intervalles de temps, une position de l'élément d'antenne de réception virtuelle formé par l'antenne d'émission *m*1' et une antenne de réception *n*1' est *d*_{*m*1'*n*1'}, une antenne d'émission *m*2 émet un signal chirp dans un intervalle de temps *u₂* parmi les U intervalles de temps, une position d'un élément d'antenne de réception virtuelle formé par l'antenne d'émission *m*2 et l'antenne de réception *n*2 est *d*_{*m*2*n*2}, une antenne d'émission m*2*' émet un signal chirp dans un intervalle de temps *u₂*' parmi les U intervalles de temps, une position d'un élément d'antenne de réception virtuelle formé par l'antenne d'émission m*2*' et une antenne de réception *n*2' est *d*_{*m*2*'n*2'}, les éléments se chevauchant dont l'intervalle d'émission est *N₁* rencontrent *d*_{*m*1*n*1} = *d*_{*m*1'*n*1'}, et
les éléments qui se chevauchent et dont l'intervalle de transmission est *N₂* rencontrent *d*_{*m*2*n*2} = *d*_{*m*2*n*2'} ; et
|*u₁*-*u₁'*|=*N*₁ et |*u₂*-*u₂'*|=*N₂*, *m*1, *n*1, *m*1', *n*1', *m*2, *n*2, *m*2', et *n*2' sont tous des entiers supérieurs ou égaux à 0, et *u₁*, *u₁'*, *u₂,* et *u₂'* sont tous des entiers supérieurs ou égaux à 0.

2. Procédé selon la revendication 1, dans lequel au moins une antenne d'émission parmi les *N_{Tx}* antennes d'émission transmet un signal chirp deux fois dans les U intervalles de temps.

3. Procédé selon la revendication 1 ou 2, dans lequel le réseau de réception virtuel formé par les *N_{Tx}* antennes d'émission et les *N_{Rx}* antennes de réception comprend des éléments qui se chevauchent et dont l'intervalle d'émission est *N₃*, *N₁*≠*N₂*≠*N₃*, et *N₃* est un entier positif.

4. Dispositif radar, dans lequel le dispositif est un radar MIMO, le radar MIMO comprend un émetteur, un récepteur et une unité de traitement, l'émetteur comprend *N_{Tx}* antennes d'émission, le récepteur comprend *N_{Rx}* antennes de réception, et *N_{Tx}* et *N_{Rx}* sont tous deux des entiers positifs supérieurs ou égaux à 2 ;
dans lequel l'émetteur, le récepteur et l'unité de traitement sont adaptés pour exécuter le procédé selon l'une quelconque des revendications 1 à 3.
